# EUROPEAN PATENT APPLICATION

(11) **EP 3 091 717 A1**
(43) Date of publication of application: **09.11.2016**
(21) Application number: 15166987.6
(22) Date of filing: 08.05.2015
(51) Int. Cl.: H04M 1/663, H04M 3/436

(54) **TELEPHONE CALL CONTROL SYSTEM AND METHOD**

(71) Applicant: Sykes, Harry, 1066 Epalinges (CH)
(72) Inventor: Sykes, Harry, 1066 Epalinges (CH)
(74) Representative: Gill Jennings & Every LLP

(57) **Abstract**

A device for monitoring telephone calls. The device comprises means for identifying a source telephone number for a telephone call. Data storage stores a reference list of telephone numbers, means for controlling the delivery of a telephone call to an end user, the means controlling the delivery based upon a comparison of the source telephone number with the reference telephone numbers in the data storage such that calls from source telephone numbers that have been identified as being the source of unwanted calls in the data storage are prevented from being passed to a user. Means receives an indication from a user that a call that has been delivered to them is an unwanted call, and updates the reference number list in the data storage to add information in respect of the source number associated with the identified unwanted call. Means provides data in respect of the source number for the identified unwanted call to corresponding devices operating to control the telephone calls of other users of the telephone network.

## Description

The present invention relates to a system and method for controlling telephone calls and for providing data based upon such control. Particularly, it relates to a system and method for assisting users in the filtering and prevention of unwanted telephone calls.

Many telephone users, when using either fixed-line or mobile devices, find it frustrating to receive nuisance or unsolicited sales calls. The problem of the unwanted receipt of such calls is well known, and traditionally has been handled by the use of call blocking services and devices. Such services and devices normally allow a user to press a button on a device after or during such a call to block future nuisance calls from such an nuisance number. Some such systems work on a discrete unit attached to the user's fixed line, and operated by the user, to provide the appropriate blocking. Other systems work remotely at the telephone service provider who can currently block hidden numbers and certain specific nuisance call numbers.

However, the originators of such unwanted calls are aware of such blocking services and have a tendency to regularly change numbers to adopt a strategy of circumventing such blocking systems and services. Furthermore, an individual user is only able to block an unwanted call source number once they have received at least one call from them, which means that then the user is still the recipient of a significant number of unwanted calls, even if they have an appropriate blocking device or have subscribed to an appropriate blocking service provided by a remote device. Also, each blocking device sold requires the user to program it with the newest nuisance numbers.

The present invention seeks to improve such blocking to reduce the number of unwanted calls that an individual user might receive. In addition, the present invention seeks to introduce further flexibility to the operation such systems to allow filtering as well as blocking, which can have advantages both to the end user and the network operator.

According to the present invention there is provided a device for monitoring telephone calls, the device comprising:
means for identifying a source telephone number for a telephone call;
data storage for storing a reference list of telephone numbers;
means for controlling the delivery of a telephone call to an end user, the means controlling the delivery based upon a comparison of the source telephone number with the reference telephone numbers in the data storage such that calls from source telephone numbers that have been identified as being the source of unwanted calls in the data storage are filtered or prevented from being passed to a user;
means for receiving an indication from a user of the type of call that has been received, and for updating the reference number list in the data storage to add information in respect of the source number associated with the indication; and
means for providing data in respect of the source number for the identified call to corresponding devices or users operating to control the telephone calls of other users of the telephone network.

The indication from a user may show that the call is an unwanted call that should be blocked in future

The device may further comprise means for a user to populate and depopulate a centralised remote database with codes that identify and class the caller numbers into varying categories that can, in turn, be used via the central algorithms invoke a range of actions or decisions.

The device may further comprise means for automatic diversion of calls to a centralised database and route redialling of a different number to complete the call or invoke other actions depending on the actions of the caller or group of users.

The device may further comprise means for automatic generation and sharing of data related to allowable call numbers, an indication of allowable numbers being provided for call source numbers that relate to calls accepted by a user

The present invention further provides a corresponding method.

The present invention determines how to control telephone calls with an individual device and a system and method whereby a central server/database is programmed by many individuals independently, by the device or otherwise, and where the results of this programing are collected centrally, analysed by decision-making algorithms and the resulting actions/decisions are redistributed to all users' devices.

The principle is that individual users may block unwanted nuisance calls that they receive. The central systems identifies and then records this decision criteria and, on identifying a pattern across the user base, perhaps when conclusive by weight of numbers, replicates this action by updating all users' individual devices and filtering or blocking the number of the unwanted caller for all users.

With the system and method in the present invention it is possible to collect information from an unlimited number of users in respect of unwanted call source numbers. This means that a particular user that has an appropriately configured device according to the present invention in their home, or subscribes to a telephone service provider that operates such a device and method of the invention on their own system, is able to benefit from the experience (and therefore the blocklist) created by other users so as to prevent receipt of unwanted calls, without having to receive and identify such calls themselves.

Furthermore, a system according to the invention enables the actions of individuals to be analysed to determine whether these actions should be adopted by the group/community as a whole. Individual actions are collected and analysed and, in accordance with proprietary action-orientated algorithms, change the decisions of individual devices or the system.

One example of the present invention will now be described with reference to the accompanying drawings, in which:
Figure 1 is a schematic diagram of a first example device according to the present invention showing certain operational features of that device; and
Figure 2 is a schematic diagram of a second example device according to the present invention and some of the key operational features of that device.

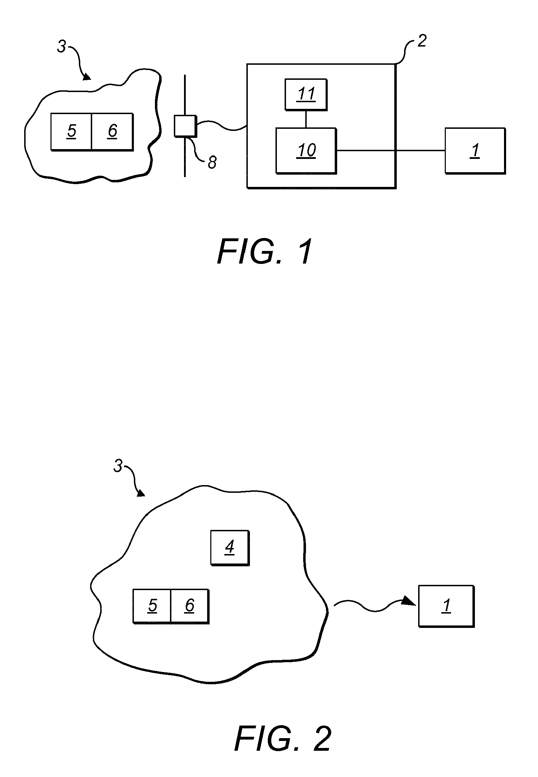

Referring to figure 1, a telephone 1 of a standard type is connected, via a device 2 according to the present invention, to a telephone network 3 via socket 8. The device 2 according to the present invention is configured to have the ability to receive data related to the source number for any telephone call coming in via the network 3 to the telephone 1 known as the Calling Line Identity (CLI). The identified source number is compared to a reference list. Lists are created by a community, downloaded to central database 6 under the control of a management centre, such as a National Management Centre (NMC), sent out to the device 2 and all other devices installed at other user locations and stored in a memory within the device 2. The device 2 has lists of acceptable (friends and family) and unacceptable numbers (nuisance callers). If the number is not on the nuisance reference list then the call is passed through to the telephone 1 which operates in a conventional manner. If the source telephone number is on the nuisance call 'blocklist' stored in the memory 11 of the device 2 then the device 2 operates to either filter or block the call to control its passage through to the telephone 1.

The device 2 is configured such that, if the user, upon answering the telephone 1, identifies the incoming call as one originating from an unwanted source, such as an unwanted sales or harassment-type call, it can receive an indication from the user, in the form of an input button or an input code dialled on the telephone 1, to make a note of the incoming number and record in the memory 11 it as one for which future calls can be either filtered or blocked. Any future call from that source number can then be added to the reference list stored on the memory 11 of the device 2 and filtered or blocked for future received calls. In addition to a simple operation in which a user may indicate a particular caller should be blocked it may be that the system is configured to give a user further alternatives. One of these alternatives may be to indicate that the source of a call should be subject to filtering, rather than absolute blocking for subsequent calls. Alternatively, it may also be possible for a user to be able to indicate that a particular caller should be added to a "white list" of acceptable callers which should never be blocked. Information relating to such selections can also be stored on memory 11 of the device 2. The device may also add numbers to which a user makes a call to the white list.

The filtering, as opposed to blocking, operation may be performed by requiring calls from appropriately selected sources to be diverted for further action, such as a requirement of input of a code or operation of further steps by the caller before the call will be passed through to the end user. Such filtering call be useful in that a network operator does not have to deal with potential complaints about absolute blocking from certain sources but that such a filtering ensures that automated calling does not get directly through, but requires manual input that may make such calling more difficult for "spam" providers of calls.

In addition to adding the number to its own reference list the device 2 provides details of the number, preferably via the internet/telephone network 3, to a remote or local database (the NMC) collection point 6. This database/system analyses the data collected from the Community of individual users via their respective devices and by virtue of the system's algorithms, identifies relevant patterns and trends determines the actions that the system should take on behalf of the group. The system 6 then takes appropriate action to filter or prevent such calls getting through to other Community members by reprogramming the list held in the installed base of such devices of the systems controlling the same decisions in the Telecom network. Information from other devices also connected to the telephone network 3 and configured in a similar manner is also received by the system. The data on the selected numbers can be sent either directly to those devices, or indirectly via a central control and processing unit 5 hosted either by the telephone service provider or a third party. Upon receipt of that data the other devices update their respective reference lists of numbers to filter or block future calls from that number for their respective users.

It will also be appreciated that additional criteria may be used to assist in the blocking, filtering, or indeed allowance of calls. For example the system, in conjunction with the device 2 allows calls originating from a similar geographical area to that of the location of the user. It may allow this for certain users within the same geographical location, whilst indicating that further users outside that location the number is to be filtered or blocked. Of course, it will be appreciated that other criteria may be used in certain circumstances. It will also be appreciated that the system of the invention can be configured to receive input from users in respect of the type of call that a particular source number is likely to provide so that any central database can store such information and provide it to other users. That information can be provided via individual devices according to the invention or an application on a smart phone or similar device that is associated with the system of the invention or a device according to the invention.

With the device 2 of the invention operating in the manner described above it is possible for an individual user to receive the benefit of the knowledge of other users on the internet/telephone network 3 and who also employ a similar device or subscribe to a similar network/cloud based service to receive the benefit of call filtering or blocking from unwanted numbers without necessarily having had to receive and identify an unwanted call from the number.

The processing unit 5 can be arranged such that it only starts filtering or blocking calls from an identified number after a certain threshold number of individual users have identified it via their respective devices 2 as being the source of unwanted calls.

An individual device 2 may also operate to either filter or block calls which do not have an identifying source number associated with them or generate a warning message to be sent to the originator of the call indicating that such calls are not accepted.

Figure 2 shows an alternative configuration of the present invention in which, in place of a device being positioned within each individual user's specific location, a device 4 of equivalent function is placed on the internet or telephone network 3. In this case, there is no physical device, the device 2 is created virtually on the network's systems. The functionality of the device 4 shown figure 2 is the same as that described above with the respective figure 1, but in this case the same service operates in the telephone network 3 itself and is operated either by the telephone service provider or by an operator given appropriate permissions by the telephone service provider. In this case the device 4 provides an effective filtering or blocking of a call on a number on the appropriate restricted list before such a call is even attempted to be delivered to the user's telephone 1 by the telephone network 3. As with the example of figure 1, the system 6 then enables a community of users to determine what should be filtered or blocked.

It will be appreciated that the system 6 of the invention can be configured to use the data received from individual users of the device 2 to provide a significant amount of useful information. For example, it can provide an indication of potential abusers of the network who are creating significant numbers of unnecessary calls. It may also be configured to provide information on the types of sales calls that are acceptable to the user group through their lack of indication by users that they are nuisance calls, or by their active assessment of call type, amongst other things.

The configuration of Figure 2 may be implemented not necessary by operation on a network, but by use of two telephone numbers for an end user. In such a circumstance, calls are dialled into a first of the two numbers and the functionality described above performed on that call to allow it through, block it or filter it. For those that have passed a filtering stage, the system then dials the second number allocated to a user who then receives the call. The system has the benefit of not needing any adaption of a current telephony network, as a number is called as usual on that network, whilst enabling all the functionality described above without the need for a device 2 to necessarily be provided to an end user whilst also ensuring that the end user obtains all the necessary functionality for the system.

With either of the configurations of figures 1 or 2 it is possible for information provided by individual users to be collected centrally for analysis and for regulatory or other purposes. Furthermore, by use of the data from individual users it is possible to configure a system with the central control and processing unit 5 configured to receive data on call activity with individual users such that, even if an individual user fails to identify a particular call as an unwanted call that should be filtered or blocked, activity in respect of a particular source number from a number of users (for example the speedy termination of calls from that number) can be used to identify the source of unwanted calls even if an appropriate number of users have failed to identify the source as one for unwanted calls, meaning that such a source is capable of being filtered or blocked even before an appropriate number of users have identified it as a problem.

As will be appreciated from the above, the present invention provides a simple and effective way of improving the efficiency of call filtering or blocking systems with little additional investment in infrastructure or without the need to maintain complex databases, or requirements for in depth investigation by third party operators, to identify the sources of unwanted calls.

## Claims

1. A device for monitoring telephone calls, the device comprising:
means for identifying a source telephone number for a telephone call;
data storage for storing a reference list of telephone numbers;
means for controlling the delivery of a telephone call to an end user, the means controlling the delivery based upon a comparison of the source telephone number with the reference telephone numbers in the data storage such that calls from source telephone numbers that have been identified as being the source of unwanted calls in the data storage are filtered or prevented from being passed to a user;
means for receiving an indication from a user of the type of call that has been received, and for updating the reference number list in the data storage to add information in respect of the source number associated with the indicated type of call; and
means for providing data in respect of the source number for the identified call to corresponding devices or users operating to control the telephone calls of other users of the telephone network.

2. The device of claim 1 arranged to be a discrete device attached directly to a telephone, and in which the device may be powered by the telephone line to which is connected.

3. A device according to claim 1 arranged to operate within or alongside a telephone network and remote from a user.

4. A device according to any preceding claim arranged such that the indication to the device of the type of call is provided by the dialling of a code by a user on their telephone.

5. A device according to any preceding claim, wherein the device further comprises means for receiving data in respect of telephone numbers that have been identified and classified as being the source of specific types of calls or unwanted calls from the telephone network and adding the received data to the data storage.

6. A device according to any preceding claims, wherein the means for controlling delivery of a telephone call to an end user, when it is determined that a call is identified as being allowed to passed through to a user or has been acceptably filtered, is passed on to the user by dialling a separate telephone number to conduct the call to a user.

7. A system for receiving call data from multiple devices of the type defined in any preceding claim, the system comprising means for analysing the call data received from the individual devices and providing an output set of data for reflecting at least one from the group of:
source telephone numbers that are the source of the nuisance calls, and source telephone numbers that are considered acceptable to users.

8. The system of claim 7, further comprising a database for the output set of data, the database having programming classification and population controlled by users of the device of any of claims 1 to 6, allowing groups of said users to make decisions and take action with calls on behalf of other users.

9. A method of operating the device or system of any preceding claim.
